(19) Europäisches Patentamt
European Patent Office
Office européen des brevets

(11) **EP 0 938 522 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(21) Anmeldenummer: **97949898.7**

(22) Anmeldetag: **10.11.1997**

(51) Int Cl.$^7$: **C08L 23/16**

(86) Internationale Anmeldenummer:
**PCT/DE97/02618**

(87) Internationale Veröffentlichungsnummer:
**WO 98/21267 (22.05.1998 Gazette 1998/20)**

(54) **VERFAHREN ZUR HERSTELLUNG EINER THERMOPLASTISCHEN ELASTOMERMASSE**

METHOD FOR PRODUCING A THERMOPLASTIC ELASTOMER MATERIAL

PROCEDE POUR PRODUIRE UN MATERIAU ELASTOMERE THERMOPLASTIQUE

(84) Benannte Vertragsstaaten:
**AT BE CH DE DK ES FI FR GB GR IE IT LI LU NL PT SE**

(30) Priorität: **14.11.1996 DE 19646969**

(43) Veröffentlichungstag der Anmeldung:
**01.09.1999 Patentblatt 1999/35**

(73) Patentinhaber: **PHOENIX AKTIENGESELLSCHAFT 21079 Hamburg (DE)**

(72) Erfinder:
• **GRÄBNER, Friedrich, Wilhelm D-21435 Stelle (DE)**
• **MARKIEWICZ, Udo D-21073 Hamburg (DE)**
• **VORTKORT, Jörg D-21442 Toppenstedt (DE)**

(56) Entgegenhaltungen:
**EP-A- 0 317 346      EP-A- 0 539 322**

**Beschreibung**

Die Erfindung betrifft ein Verfahren zur Herstellung einer thermoplastischen Elastomermasse (TPE) in Form einer Mischung aus einem oder mehreren thermoplastischen Kunststoff/en und einem oder mehreren vernetzten Kautschuk/en, hergestellt wiederum aus

- einem oder mehreren thermoplastischen Kunststoff/en in einer Menge von 10 bis 90 Gew.-%,
- einem oder mehreren unvernetzten Kautschuk/en,
- Vernetzungsaktivator,
- Vernetzer sowie
- gegebenenfalls weiteren Zusatzstoffen

unter Verwendung eines Walzensystems, umfassend eine Einzugsöffnung einer Förderschnecke, die das erste Walzenelement speist, sowie weitere Walzenelemente mit Zugabestellen im Übergangsbereich der Walzenelemente, wobei jedes Walzenelement eine Hauptspindel (Zentralspindel) und mehrere Umlaufspindeln aufweist, wobei ferner über die Einzugsöffnung und die Zugabestellen die Mischungsbestandteile in das Walzensystem eingespeist werden.

Die gattungsgemäße Elastomermasse ist ein Blend, bestehend aus einem thermoplastischen Kunststoff und einem vernetzten Kautschuk. Die Vernetzung des Kautschuks geschieht durch dynamische Vulkanisation. Unter dem Begriff dynamische Vulkanisation versteht man ein Verfahren, bei dem der thermoplastische Kunststoff, der Kautschuk und das Vernetzersystem mastifiziert (aufgeschmolzen und dispergiert) werden, während der Kautschuk vernetzt. Beispiele für dynamisch vernetzte thermoplastische Elastomere und das Verfahren der dynamischen Vulkanisation sind in den US-Patentschriften 4 130 535 und 4 311 628 beschrieben. In der deutschen Offenlegungsschrift 26 32 654 ist ein Blend aus einem thermoplastischen Polyolefin, einem EPDM-Kautschuk und einem beliebigen aus der US-Patentschrift 3 806 558 bekannten Vernetzersystem beschrieben. Der Kautschuk ist bis zu einem solchen Ausmaß vulkanisiert, daß er nicht mehr als etwa drei Prozent in Cyclohexan bei 23°C extrahierbaren Kautschuk enthält. Die GB-A-2 007 683 beschreibt ferner ein thermoplastisches Elastomer, beinhaltend ein thermoplastisches kristallines Polyolefinharz und vulkanisiertes EPDM. Die Vernetzung des Kautschuks erfolgt mit einem Phenolharz. Der erzielte Vernetzungsgrad ist größer als 97 %. In der EP 0 107 635 B2 wird darauf verwiesen, daß die bis dahin üblichen Mischverfahren zur Herstellung der dynamisch vulkanisierten thermoplastischen Elastomere nicht dazu geeignet sind, weiche Mischungen mit guter Extrudierbarkeit herzustellen. Es wird ein Einstufenverfahren im gleichsinnig drehenden Doppelschneckenextruder beschrieben, welches bei hohen Schergeschwindigkeiten > 2000 s$^{-1}$ und einer Verweilzeit < 2 min die Fertigung gut extrudierbarer weicher thermoplastischer Elastomere ermöglicht. Das Mastifizieren des Kautschuks und der anderen Komponenten findet im ersten Drittel des Doppelschneckenextruders statt. Die dynamische Vulkanisation erfolgt in den letzten beiden Dritteln. Ein ähnliches Verfahren zur Herstellung eines dynamisch vulkanisierten thermoplastischen Elastomeren ist in der EP 0 072 203 A2 beschrieben. Hier wird im Einstufenprozeß auf einem gleichsinnig drehenden Doppelschneckenextruder ein teilvernetzer thermoplastischer Elastomer aus einem peroxidisch vernetzbaren olefinischen Copolymer-Kautschuk, einem nicht durch Peroxid abbauenden Polyolefinharz und einem organischen Peroxid hergestellt. Die Mischungsbestandteile werden dem Doppelschneckenextruder direkt zugeführt. In der EP 0 547 843 A1 wird ferner ein Einstufenverfahren zur Herstellung eines dynamisch vulkanisierten thermoplastischen Elastomeren beschrieben, wobei hier ein olefinischer Copolymer-Kautschuk und ein thermoplastisches Polyolefin direkt einem Mischextruder zugeführt wird. Die Zugabe eines organischen Peroxides erfolgt in Strömungsrichtung weiter abwärts in der Plastifiziereinheit. Die Schergeschwindigkeit der dynamischen Vulkanisation ist > 500 s$^{-1}$. Für das beschriebene Vorgehen können Einschnecken-, Doppelschnecken- oder Mehrschneckenextruder eingesetzt werden.

Die bislang bekannten Mischverfahren zur Herstellung eines dynamisch vernetzten therrnoplastischen Elastomeren sind mit folgenden Problemen behaftet.

Mit einem Kneter (Innenmischer) ist es nicht möglich, eine ausreichende Dispergierung und Homogenisierung während der dynamischen Vulkanisation der Elastomerphase zu erreichen. Hohe Schergeschwindigkeiten sind aufgrund der in der EP 0 107 635 B2 beschriebenen Gegebenheiten nur unzureichend oder gar nicht zu erzielen. Die Fertigung von weichen, gut extrudierbaren Mischungen ist mit diesem Verfahren nicht möglich.

Ein gleichsinnig drehender Doppelschneckenextruder ist in der Lage, eine ausreichende Dispergierung und Homogenisierung zu gewährleisten. Die Fertigung von weichen, gut extrudierbaren thermoplastischen Elastomeren mit dynamisch vernetzter Elastomerphase ist mit dieser Verfahrenseinheit zwar möglich; es werden aber hohe Schergeschwindigkeiten > 2000 s$^{-1}$ benötigt. Diese hohen Schergeschwindigkeiten und die damit in den Kunststoff eingebrachte mechanische Energie wird in Wärme umgewandelt und führt zu einem erheblichen Anstieg der mittleren Temperatur der Schmelze generell und aufgrund der schlechten Temperaturleitwerte der Kunststoffe zu Temperatur- und Viskositätsinhomogenitäten im Detail. Der hohe Energieeintrag bei gleichzeitig ansteigender Massetemperatur führt zu einer erhöhten Materialbelastung oder gar zum Materialabbau. Aufgrund der Oberflächenverhältnisse ist es mit dem bekannten gleichsinnig drehenden Doppelschneckenextruder nicht möglich, die eingebrachte Energie durch die vorhandene Kühlung wieder abzuführen und eine schonende Dispergierung und Homogenisierung während der dynamischen Vulkanisation der Kautschukphase zu ermöglichen. Die Bestückung des Schneckenpaares mit Förder-, Misch- und Knetelementen stellt somit immer einen Kompromiß aus Energieeintrag und Massetemperaturerhöhung der Schmelze dar.

Der Erfindung liegt nun die Aufgabe zugrunde, ein schonendes Verfahren zur Herstellung von dynamisch vulkanisierten thermoplastischen Elastomermassen bereitzustellen, welches eine sehr gute Dispergierung und Homogenisierung eines dynamisch vernetzten thermoplastischen Elastomeren bei verbesserter Temperaturführung während des Dispergierens und der dynamischen Vulkanisation ermöglicht, verbunden mit dem Erhalt thermoplastischer Vulkanisate mit verbesserten Eigenschaften.

Gelöst wird diese Aufgabe durch die kennzeichnenden Verfahrensschritte des Patentanspruches 1 (Variante A) oder des Patentanspruches 2 (Variante B).

Die erfindungswesentlichen Verfahrensschritte der beiden Varianten sind:

Variante A

- Der/die thermoplastische/n Kunststoff/e und/oder der/die unvernetzte/n Kautschuk/e werden in Abwesenheit des Vernetzers über die Einzugsöffnung in das Walzensystem eingespeist und anschließend aufgeschmolzen und dispergiert, und zwar unter Bildung einer homogenen Mischung;
- die homogene Mischung wird in den Walzenelementen transportiert, und zwar unter gleichzeitiger Zugabe des Vernetzers an einem Übergangsbereich der Walzenelemente;
- die mit dem Vernetzer versehene Mischung wird dispergiert und homogenisiert, und zwar bei gleichzeitiger Vulkanisation bei Dehngeschwindigkeiten von 100 bis 1500 s$^{-1}$, insbesondere 500 bis 1500 s$^{-1}$, unter Bildung der thermoplastischen Elastomermasse.

Variante B

- Der/die thermoplastische/n Kunststoff/e und/oder die unvernetzte/n Kautschuk/e werden zusammen mit dem Vernetzer über die Einzugsöffnung in das Walzensystem eingespeist und anschließend aufgeschmolzen und dispergiert;
- die Mischung wird bei gleichzeitiger Vulkanisation bei Dehngeschwindigkeiten von 100 bis 1500 s$^{-1}$, insbesondere 500 bis 1500 s$^{-1}$ unter Bildung der thermoplastischen Elastomermasse dispergiert und homogenisiert.

Bei beiden Varianten ist es ferner von Bedeutung, daß die ausgewalzte Fläche pro kg thermoplastischer Elastomermasse $\geq$ 75 m$^2$, insbesondere $\geq$ 100 m$^2$, insbesondere wiederum 100 bis 300 m$^2$, beträgt, und zwar bezogen auf die Gesamtheit der Walzenelemente.

Nach beiden Varianten kann der Vernetzungsaktivator sowie die gegebenenfalls vorhandenen Zusatzstoffe, die beispielhaft Weichmacheröle, Füllstoffe, Verstärkungsstoffe, Verarbeitungshilfsmittel, Alterungsschutzmittel, innere und äußere Gleitmittel sein können, über die Einzugsöffnung oder über eine andere Zugabestelle in das Walzensystem eingespeist werden, wobei es bei der Variante A zweckmäßig ist, wenn der Vernetzungsaktivator vor der Zugabe des Vernetzers erfolgt.

Wird im Rahmen dieser beiden Varianten nur der thermoplastische Kunststoff über die Einzugsöffnung in das Walzensystem eingespeist, so kann der unvernetzte Kautschuk über eine andere Zugabestelle dem Walzensystem zugeführt werden. Das gleiche gilt auch umgekehrt, wenn zunächst nur unvernetzter Kautschuk über die Einzugsöffnung in das Walzensystem eingespeist wird.

Die Gesamtheit aller zweckmäßigen Verfahrensparameter wird in den Patentansprüchen 3 bis 13 festgehalten.

Im folgenden wird nun die neue Verfahrenstechnologie beispielhaft anhand von Versuchsergebnissen detailliert beschrieben.

Der Prozeß bereitet die thermoplastische Elastomermasse in einzelnen Knetwulsten auf, wobei walzwerkähnliche Effekte erzielt werden. Charakteristisch für das erfindungsgemäße Verfahren ist die ausgezeichnete Dispergierung und die exakte Temperaturführung. Im Gegensatz zu den für die Herstellung von thermoplastischen Vulkanisaten bekannten Ein-, Doppel- oder Mehrschneckenextrudern, bei denen die aktive Flanke der Schnecke das Material in Richtung Austragsöffnung transportiert, wird hier durch Axialkräfte, die beim Eingriff von verzahnten Umlaufspindeln in eine verzahnte Hauptspindel entstehen, der Materialtransport erreicht. Die Verzahnung kann einen Winkel von 10° bis 80°, insbesondere von 45°, aufweisen. Durch die Drehung der Hauptspindel werden die umlaufenden Spindeln angetrieben. Des weiteren findet im Gegensatz zu Ein- oder Doppelschneckenextrudern, in denen ein relativ kompaktes Feststoffbett aufgeschmolzen werden muß, nach dem erfindungsgemäßen Verfahren eine Wärmeeinbringung statt, die der beim Verarbeiten auf Walzwerken sehr nahe kommt. Die besondere Eignung des erfindungsgemäßen Verfahrens für thermoplastische Vulkanisate resultiert neben den großen wärmeauszutauschenden Flächen aus den besonderen Strömungsverhältnissen im Planetenteil. Das im Zahnquerschnitt befindliche Material wird durch die Querschnittsverengung der Flankenspalte gepreßt. Die 45° Verzahnung sorgt dafür, daß entlang der Umlaufspindeln stets nur punktuell ein Druckmaximum entsteht. Wegen des kleinen Querschnitts im Kopfspiel der Verzahnung herrschen hier örtlich hohe Strömungsgeschwindigkeiten, die zu einer guten Dispergierung, Homogenisierung und zu einer hervorragenden Spülung des Zahngrundes führen.

Im Rahmen der Untersuchungen hat sich gezeigt, daß eine hervorragende Dispergierung der vulkanisierten Kautschukphase erreicht wird, wenn ein Kilogramm der thermoplastischen Elastomermischung während des gesamten erfindungsgemäßen Prozesses auf eine Fläche von 75 $m^2$ bis 300 $m^3$ ausgewalzt wird. Bevorzugt sind dabei Flächen von 100 bis 300 $m^2$ pro kg TPE.

Im Diagramm wird die Abhängigkeit der Partikelzerteilung von der Strömungsform (Kurve 1 für reine Scherströmung; Kurve 2 für biaxiale Dehnströmung) und dem Viskositätsverhältnis $\lambda_1$ der dispersen Phase zur kontinuierlichen Phase dargestellt. Eine weitere Zerteilung der dispersen Phase ist möglich, solange die Weber-Zahl $W_e$ größer einer kritischen Weber-Zahl $W_{e\ kritisch}$ ist.

$$W_e = \frac{\eta_{CP}(\dot{\gamma}) \cdot \dot{\gamma} \cdot R}{\sigma_{12}} > W_{e\ kritisch} , \qquad W_e = f(\text{Strömungsform}, \lambda_1)$$

Die einzelnen Parameter bedeuten zusammenfassend:

$W_e$      Weber-Zahl

$\eta_{CP}$      Viskosität der kontinuierlichen Phase (hier thermoplastischer Kunststoff)

$\eta_{DP}$      Viskosität der dispersen Phase (hier Kautschuk)

$\lambda_1$      Verhältnis der Viskositäten

$\dot{\gamma}$      Schergeschwindigkeit

$\sigma_{12}$      Grenzflächenspannung

R      Radius der dispersen Phase (hier Kautschuk)

Im Diagramm ist $W_{e\ kritisch}$ als Ordinate aufgetragen. Für den dargestellten Viskositätsverhältnisbereich $\lambda_1$ (Abszisse) ergeben sich für biaxiale Dehnströmungen deutlich kleinere kritische Weber-Zahlen.

Aus dieser Darstellung kann man erkennen, daß besonders die beim Eingriff der verzahnten Umlaufspindeln in die verzahnte Hauptwalze entstehenden Dehnströmungen zu einer weitergehenden Zerteilung der vulkanisierenden Kautschukpartikel führen.

Mit einer reinen Scherströmung ist eine Partikelzerteilung nur in einem Viskositätsverhältnisbereich der dispersen Phase zur kontinuierlichen Phase von ca. $0,1 < \eta_{DP} / \eta_{CP} < 4$ möglich, und zwar entsprechend der Fläche über der Kurve 1 (Dispergierung). Eine weitere Zerteilung der vulkanisierenden Kautschuk-Partikel ist nur mit Dehnströmungen, wie sie bei dem erfindungsgemäßen Verfahren vorliegen, möglich, und zwar entsprechend der Fläche über der Kurve 2 (Dispergierung). Unterhalb der Kurven 1 und 2 ist dagegen keine Dispergierung möglich.

Die Aufbereitung der thermoplastischen Vulkanisate mit verbesserten Eigenschaften erfolgt beim erfindungsgemäßen Verfahren mit Dehngeschwindigkeiten zwischen Zahngrund und Zahnsteg im Bereich von 100 bis 1500 $s^{-1}$, bevorzugt in einem Bereich zwischen 500 bis 1500 $s^{-1}$.

Ferner hat sich bei den Untersuchungen gezeigt, daß die Reaktionsgeschwindigkeit bei der dynamischen Vulkanisation in entscheidendem Maße von den eingeleiteten Vergleichsspannungen und der pro Umdrehung ausgewalzten Oberfläche des Aufbereitungsaggregates abhängig ist. Der Prozeß dieser Erfindung erzeugt pro Umdrehung, bei vergleichbarer Verweilzeit, eine um den Faktor 2,5 bis 3 größere Oberfläche als dies mit den zur Zeit eingesetzten Ein- oder Doppelschneckenextrudern möglich ist.

Insbesondere führen die großen ausgewalzten Oberflächen in Verbindung mit den durch die hohen Dehnungsgeschwindigkeiten verursachten großen Vergleichsspannungen zu einem deutlichen Anstieg der Vernetzungsgeschwindigkeit.

Für einen bevorzugten Vernetzungsgrad der Kautschukphase von > 90 % wurden folgende Vulkanisationszeiten in den unten aufgeführten Aufbereitungsaggreagten (Innenmischer, Doppelschneckenextruder, Planetwalzenextruder) ermittelt. Die Bestimmung des Vernetzungsgrades erfolgte durch Lösen in Cyclohexan bei Raumtemperatur. Die Mischungsrezeptur und die Verfahrensparameter sind in den Tabellen 1 bzw. 2 zusammengestellt. Parallel wurde die Vulkanisationszeit der in der Tabelle 1 aufgeführten Rezeptur ohne thermoplastischen Kunststoff im Vulkameter bestimmt. Dabei bedeutet $t_{v90}$ die Zeit für einen Vulkanisationsumsatz von 90 %.

Vulkameter: $t_{v90}$ = 9 min

Innenmischer: $t_{v90}$ = 4 min

Doppelschneckenextruder: $t_{v90}$ = 0,5 bis 0,7 min

Planetwalzenextruder: $t_{v90}$ = 0,2 bis 0,4 min

Durch die große ausgewalzte Oberfläche pro Umdrehung der Häuptspindel und die damit verbundene große Anzahl an Platzwechselvorgängen ist es mit dem erfindungsgemäßen Verfahren möglich, die für die Vulkanisation der Kautschukphase benötigte Verweilzeit gegenüber den bestehenden Verfahrenstechniken deutlich zu reduzieren. Die minimale Verweilzeit im Beisein des Vernetzungsaktivators und des Vernetzers beträgt weniger als 60 s, bevorzugt 10 bis 30 s.

Die mit dem erfindungsgemäßen Verfahren hergestellten thermoplastischen Elastomermassen weisen bevorzugt einen Vernetzungsgrad der Kautschukphase > 90 % auf.

Ein Walzensystem, welches sich zur Durchführung des erfindungsgemäßen Prozesses eignet, ist in den Druckschriften DE 91 11 406 U1, DE 37 25 641 C2, DE 37 12 749 C1 und DE 27 19 095 C2 beschrieben. Besonders geeignet ist ein Walzensystem gemäß DE 39 08 415 A. Im Walzenteil besitzen sowohl die Hauptspindel als auch der Zylindermantel eine Flüssigtemperierung, wobei insbesondere mit drucküberlagertem Wasser eine effektive und kontrollierte Temperaturführung möglich ist.

Das erfindungsgemäße Verfahren wurde im Rahmen eines Versuches auf einem Walzensystem bevorzugt wie folgt durchgeführt.

Für die Untersuchungen wurde ein Planetwalzensystem der Firma ENTEX TP-WE 70 M3 eingesetzt. Generell eignet sich jedes Planetwalzensystem, welches für diesen Prozeß benötigte Verweilzeiten und Dehngeschwindigkeiten ermöglicht. Der Kautschuk, der thermoplastische Kunststoffe und weitere pulverförmige Mischungsbestandteile wurden der Einzugsöffnung einer Förderschnecke zugeführt, die das erste Planetwalzenelement speist. Als Kautschuk wurden 200 pbw (parts by weight) eines mit 100 Teilen Öl gestreckten EPDM eingesetzt (Keltan 509x100 von DSM). Der Ethylidennorbornen-Anteil betrug 8 Gew.-%. Als thermoplastische Komponente wurden 50 pbw eines Polypropylen-Homopolymer mit einem MFI = 0,7 eingesetzt (Moplen Q 30 P von Montell). Als Füllstoff wurden 20 pbw eines calzinierten Kaolins zugegeben (Polestar 200 R von ECC). Als Alterungsschutz wurden 0,5 pbw Irganox 1010 (von Ciba Additive GmbH) dosiert. Weiter wurden 0,5 pbw Zinkstearat (SM 101 von Peter Greven) zugegeben. Als Vernetzungsaktivator wurden 2 pbw Zinkoxid aktiv (von Bayer AG) und 1 pbw Salicylsäure (von Hinrich Tietjen) zugegeben. In den Übergangsbereichen zwischen dem ersten und zweiten sowie jedem weiteren Planetwalzenelement sind Zugabemöglichkeiten für flüssige und feste Komponenten vorhanden. Im Rahmen der Untersuchung wurde gemäß Verfahrensvariante A zwischen dem ersten und zweiten Walzenelement der Vernetzer zugegeben. Der Vernetzer war hier eine Lösung aus 5 pbw Phenolharz (Schenectady SP 1045 von Krahn Chemie) und 5 pbw eines paraffinischen Weichmachers (Sunpar 150 von Sunoil), wobei die Lösung in die Schmelze eingespritzt wurde. Generell kann jeder bekannte Vernetzer der Kautschuk-Thermoplast-Schmelze zugegeben werden, der sich jedoch für den gewählten Kautschuk eignen muß. Besonders vorteilhaft kann auch die Vernetzung der Kautschukphase mit Peroxiden mit dem erfindungsgemäßen Verfahren durchgeführt werden.

Aufgrund der kurzen Verweilzeiten und der exakt geführten Temperatur während der dynamischen Vulkanisation können thermoplastische Vulkanisate mit verbesserten Eigenschaften der kontinuierlichen Polypropylenphase erhalten werden. Dies resultiert aus einem geringeren Abbau des Polypropylens durch entstehende Radikale.

In den zwei folgenden Planetwalzenelementen findet die dynamische Vulkanisation der Kautschukphase statt. Zwischen dem zweiten und dritten Walzenelement wird je nach gewünschter Härte die entsprechende Menge an Weichmacheröl in die Schmelze gegeben. Für ein thermoplastisches Vulkanisat mit einer Härte von 75 Shore A wurden 15 pbw eines paraffinischen Weichermachers (Sunpar 150 von Sunoil) eingespritzt.

Am Ende des dritten Walzenelementes wird die Schmelze vorteilhafterweise unter Vakuum entgast. Dem letzten Walzenelement folgt dann eine Granulierung.

Die Verweilzeit der Versuchsmischung betrug bei einer Drehzahl der Zentralspindel von 140 min$^{-1}$ und einem Durchsatz von 105 kg/h nur 20 s. Die Länge der Zentralspindel betrug für das Versuchswalzensystem 1200 mm. Generell kann die Zentralspindel eine Länge von 0,5 bis 6 m aufweisen. Die Planetwalzenelemente des eingesetzten Walzensystems sind mit einer Wassertemperierung versehen. Die wasserführende Wendel ist in die Oberfläche des Walzenzylinders eingebracht. Die Massetemperatur während der dynamischen Vulkanisation liegt 0 bis 70°C, bevorzugt 10 bis 50°C, über der Schmelztemperatur des thermoplastischen Kunststoffes. Bei der Testmischung und dem bevorzugten Verfahren wurde eine Massetemperatur am Austritt des letzten Planetwalzenelementes von 200 bis 210°C gemessen. Die Messung der Massetemperatur erfolgte mit einem Einstechthermometer. Diese liegt somit 35 bis 45°C über der Schmelztemperatur des Polypropylens (Moplen Q 30 P von Montell). Vergleichbare Versuche auf einem Doppelschneckenextruder führten bei einem Schneckendurchmesser von 40 mm und Schneckendrehzahlen von 350 bis 450 min$^{-1}$ zu Massetemperaturen von 240 bis 290°C.

Im Rahmen einer abschließenden Übersicht werden die Mischungsrezeptur (Tabelle 1) und die Verfahrensparameter (Tabelle 2) nochmals zusammengefaßt, verbunden mit folgenden Erklärungen:

| | |
|---|---|
| a | Innenmischer (Farrel) |
| b | Doppelschneckenextruder (Berstorff ZE 40) |
| c | Planetwalzenextruder (ENTEX TP-WE 70 M3) |
| Vulkanisationszeit: | Dies ist die Zeit für die Vulkanisation der Kautschukphase, und zwar gemessen von der Zugabe des Vernetzers bis zum Verlassen des Aufbereitungsaggregates. Für den Doppelschneckenextruder und den Planetwalzenextruder wurden die minimalen Verweilzeiten nach der Vernetzerzugabe ermittelt. |
| Shore A: | DIN 53505 |
| Reißfestigkeit: | ISO 527 |
| Reißdehnung: | ISO 527 |
| Druckverformungsrest: | ASTM D 395 B<br>Prüfbedingungen: 25 %, 70°C, 22h, 30 min |

Tabelle 1

| | | |
|---|---|---|
| Keltan 509x100 | 200 pbw | 66,90 Gew-% |
| Moplen Q 30 P | 50 pbw | 16,70 Gew-% |
| Polestar 200 R | 20 pbw | 6,70 Gew-% |
| Sunpar 150 | 20 pbw | 6,70 Gew-% |
| Zinkoxid aktiv | 2 pbw | 0,67 Gew-% |
| Zinkstearat | 0,5 pbw | 0,16 Gew-% |
| Irganox 1010 | 0,5 pbw | 0,16 Gew-% |
| Salicylsäure | 1 pbw | 0,32 Gew-% |
| Harz SP 1045 | 5 pbw | 1,69 Gew-% |
| Summe | 299 pbw | 100,00 Gew.-% |

Tabelle 2

| | | a | b | c |
|---|---|---|---|---|
| Durchmesser | [mm] | - | 40 | 70 |
| Volumen | [Liter] | 1,2 | - | - |
| Länge | L/D bzw. mm | - | 48 | 1200 |
| Drehzahl | [min$^{-1}$] | 150 | 400 | 140 |

Tabelle 2   (fortgesetzt)

| | | a | b | c |
|---|---|---|---|---|
| Vulkanisationszeit | [s] | 240 | 35 | 15 |
| Durchsatz | [kg/h] | 8 | 73 | 105 |
| Massetemperatur | [°C] | 215 | 280 | 210 |
| Shore A | [SHE] | 75 | 71 | 74 |
| Reißfestigkeit | [N/mm$^2$] | 4,8 | 4,6 | 5 |
| Reißdehnung | [%] | 220 | 296 | 320 |
| Druckverformungsrest | [%] | 45 | 48 | 40 |

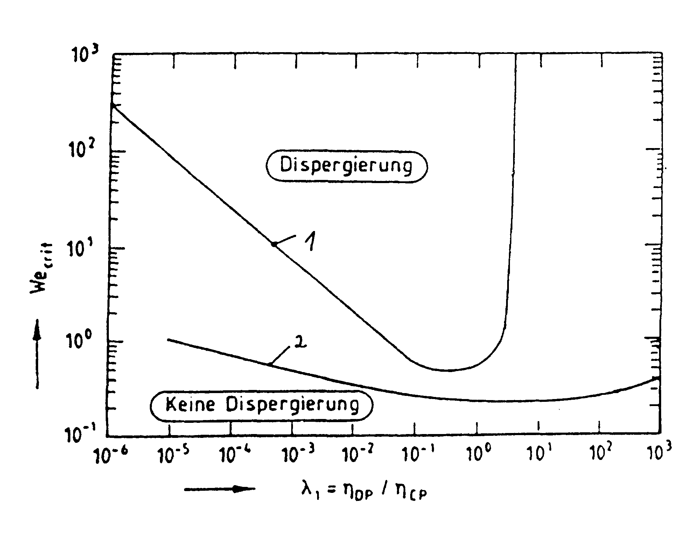

**Patentansprüche**

1.  Verfahren zur Herstellung einer thermoplastischen Elastomermasse in Form einer Mischung aus einem oder mehreren thermoplastischen Kunststoff/en und einem oder mehreren vernetzten Kautschuk/en, hergestellt wiederum aus den folgenden Mischungsbestandteilen, nämlich aus

    -   einem oder mehreren thermoplastischen Kunststoff/en in einer Menge von 10 bis 90 Gew.-%,
    -   einem oder mehreren unvernetzten Kautschuk/en,
    -   Vernetzungsaktivator,
    -   Vernetzer sowie
    -   gegebenenfalls weiteren Zusatzstoffen

    unter Verwendung eines Walzensystems, umfassend eine Einzugsöffnung einer Förderschnecke, die das erste Walzenelement speist, sowie weitere Walzenelemente mit Zugabestellen im Übergangsbereich der Walzenelemente, wobei jedes Walzenelement eine Hauptspindel und mehrere Umlaufspindeln aufweist, wobei ferner über die Einzugsöffnung und die Zugabestellen die Mischungsbestandteile in das Walzensystem eingespeist werden, **gekennzeichnet durch** folgende Verfahrensschritte:

    -   der/die thermoplastische/n Kunststoff/e und/oder der/die unvernetzte/n Kautschuk/e werden in Abwesenheit des Vernetzers über die Einzugsöffnung in das Walzensystem eingespeist und anschließend aufgeschmolzen und dispergiert, und zwar unter Bildung einer homogenen Mischung;
    -   die homogene Mischung wird in den Walzenelementen transportiert, und zwar unter gleichzeitiger Zugabe des Vernetzers an einem Übergangsbereich der Walzenelemente;
    -   die mit dem Vernetzer versehene Mischung wird dispergiert und homogenisiert, und zwar bei gleichzeitiger Vulkanisation bei Dehngeschwindigkeiten von 100 bis 1500 s$^{-1}$ unter Bildung der thermoplastischen Elastomermasse;

    wobei die ausgewalzte Fläche pro kg thermoplastischer Elastomermasse $\geq$ 75 m$^2$ beträgt, und zwar bezogen auf die Gesamtheit der Walzenelemente.

2.  Verfahren zur Herstellung einer thermoplastischen Elastomermasse in Form einer Mischung aus einem oder mehreren thermoplastischen Kunststoff/en und einem oder mehreren vernetzten Kautschuk/en, hergestellt wiederum aus den folgenden Mischungsbestandteilen, nämlich aus

    -   einem oder mehreren thermoplastischen Kunststoff/en in einer Menge von 10 bis 90 Gew.-%,
    -   einem oder mehreren unvernetzten Kautschuk/en,
    -   Vernetzungsaktivator,
    -   Vernetzer sowie
    -   gegebenenfalls weiteren Zusatzstoffen

    unter Verwendung eines Walzensystems, umfassend eine Einzugsöffnung einer Förderschnecke, die das erste Walzenelement speist, sowie weitere Walzenelemente mit Zugabestellen im Übergangsbereich der Walzenelemente, wobei jedes Walzenelement eine Hauptspindel und mehrere Umlaufspindeln aufweist, wobei ferner über die Einzugsöffnung und die Zugabestellen die Mischungsbestandteile in das Walzensystem eingespeist werden, **gekennzeichnet durch** folgende Verfahrensschritte:

- der/die thermoplastische/n Kunststoff/e und/oder die unvernetzte/n Kautschuk/e werden zusammen mit dem Vernetzer über die Einzugsöffnung in das Walzensystem eingespeist und anschließend aufgeschmolzen und dispergiert;
- die Mischung wird bei gleichzeitiger Vulkanisation bei Dehngeschwindigkeiten von 100 bis 1500 s$^{-1}$ unter Bildung der thermoplastischen Elastomermasse dispergiert und homogenisiert;

wobei die ausgewalzte Fläche pro kg thermoplastischer Elastomermasse $\geq$ 75 m$^2$ beträgt, und zwar bezogen auf die Gesamtheit der Walzenelemente.

3. Verfahren nach Anspruch 1, **dadurch gekennzeichnet, daß** der Vernetzungsaktivator vor der Zugabe des Vernetzers erfolgt.

4. Verfahren nach einem der Ansprüche 1 bis 3, **dadurch gekennzeichnet, daß** die ausgewalzte Fläche pro kg thermoplastischer Elastomermasse $\geq$ 100m$^2$, insbesondere 100 bis 300 m$^2$, beträgt.

5. Verfahren nach einem der Ansprüche 1 bis 4, **dadurch gekennzeichnet, daß** die Zerteilung der vernetzenden Kautschukpartikel bei einem Wert von $\eta_{DP}/\eta_{CP} \geq 4$ durch hohe Dehnströmungen beim Eingreifen der Umlaufspindeln in den Schneckengrund der Hauptspindel erfolgt, wobei $\eta_{DP}$ die Viskosität der dispersen Phase und $\eta_{CP}$ die Viskosität der kontinuierlichen Phase ist.

6. Verfahren nach einem der Ansprüche 1 bis 5, **dadurch gekennzeichnet, daß** die Dehngeschwindigkeiten 500 bis 1500 s$^{-1}$ betragen.

7. Verfahren nach einem der Ansprüche 1 bis 6, **dadurch gekennzeichnet, daß** die Verweilzeit der Mischung $\leq$ 60 s, insbesondere 10 bis 30 s, beträgt, und zwar bezogen auf die Gesamtheit der Walzenelemente.

8. Verfahren nach einem der Ansprüche 1 bis 7, **dadurch gekennzeichnet, daß** die Vernetzungszeit des Kautschuks $\leq$ 30 s beträgt.

9. Verfahren nach einem der Ansprüche 1 bis 8, **dadurch gekennzeichnet, daß** die Temperatur der thermoplastischen Elastomermasse beim Austritt aus dem letzten Walzenelement nicht mehr als 70°C, insbesondere nicht mehr als 50°C, über der Schmelztemperatur des thermoplastischen Kunststoffes liegt.

10. Verfahren nach einem der Ansprüche 1 bis 9, **dadurch gekennzeichnet, daß** das Walzensystem eine Gesamtlänge von 0,8 bis 6 m aufweist, und zwar bezogen auf die Gesamtheit der Walzenelemente.

11. Verfahren nach einem der Ansprüche 1 bis 10, **dadurch gekennzeichnet, daß** die Vernetzung des Kautschuks in einem solchen Maße geschieht, daß nicht mehr als 10 Gew.-%, insbesondere nicht mehr als 5 Gew.-%, des Kautschuks in einem Kautschuklösungsmittel löslich sind.

12. Verfahren nach einem der Ansprüche 1 bis 11, **dadurch gekennzeichnet, daß** die geschmolzene thermoplastische Elastomermasse entgast wird, insbesondere unter Vakuum.

13. Verfahren nach einem der Ansprüche 1 bis 12, **dadurch gekennzeichnet, daß** als Walzensystem ein Planetwalzenextruder verwendet wird.

**Claims**

1. Method for producing a thermoplastic elastomer material in the form of a mixture of one or more thermoplastic plastics and one or more cured rubbers, again produced from the following mixture components, namely

- one or more thermoplastic plastics in a quantity from 10 to 90% by weight,
- one or more uncured rubbers,
- curing activator,
- curing agent and
- possibly further additives,

using a roll system, comprising an intake opening of a conveyor screw which feeds the first roll element, and further roll elements with adding locations in the transitional area of the roll elements, whereby each roll element exhibits a main spindle and a plurality of revolving spindles, whereby further the mixture components are fed into the roll system through the intake opening and the adding locations, **characterised by** the following process steps:

- the thermoplastic plastic or plastics and/or the uncured rubber or rubbers are fed into the roll system through the intake opening in the absence of the curing agent and then melted and dispersed, forming a homogeneous mixture;
- the homogeneous mixture is conveyed in the roll elements, and at the same time the curing agent is added in a transitional area of the roll elements;
- the mixture with the curing agent is dispersed and homogenised, and at the same time vulcanised with high expansion rates from 100 to 1500 $s^{-1}$, forming the thermoplastic elastomer material;

whereby the rolled out area per kg of thermoplastic elastomer material is at least 75 $m^2$, related to the totality of the roll elements.

2. Method for producing a thermoplastic elastomer material in the form of a mixture of one or more thermoplastic plastics and one or more cured rubbers, again produced from the following mixture components, namely

- one or more thermoplastic plastics in a quantity from 10 to 90% by weight,
- one or more uncured rubbers,
- curing activator,
- curing agent and
- possibly further additives,

using a roll system, comprising an intake opening of a conveyor screw which feeds the first roll element, and further roll elements with adding locations in the transitional area of the roll elements, whereby each roll element exhibits a main spindle and a plurality of revolving spindles, whereby further the mixture components are fed into the roll system through the intake opening and the adding locations, **characterised by** the following process steps:

- the thermoplastic plastic or plastics and/or the uncured rubber or rubbers are fed into the roll system through the intake opening together with the curing agent and then melted and dispersed;
- the mixture is dispersed and homogenised and at the same time vulcanised with expansion rates from 100 to 1500 $s^{-1}$, forming the thermoplastic elastomer material; whereby the rolled out area per kg of thermoplastic elastomer material is at least 75 $m^2$, related to the totality of the roll elements.

3. Method according to claim 1, **characterised in that** the curing activator is added before the addition of the curing agent.

4. Method according to one of claims 1 to 3, **characterised in that** the rolled out area per kg of thermoplastic elastomer material is at least 100 $m^2$, in particular 100 to 300 $m^2$.

5. Method according to one of claims 1 to 4, **characterised in that** the breakdown of the curing rubber particles takes place at a value of $\eta_{DP}/\eta_{CP} \geq 4$ through high expansion streams when the revolving spindles engage in the base of the screw of the main spindle, whereby $\eta_{DP}$ is the viscosity of the dispersed phase and $\eta_{CP}$ is the viscosity of the continuous phase.

6. Method according to one of claims 1 to 5, **characterised in that** the expansion rates are 500 to 1500 $s^{-1}$.

7. Method according to one of claims 1 to 6, **characterised in that** the dwell time of the mixture is at most 60 s, in particular 10 to 30 s, related to the totality of the roll elements.

8. Method according to one of claims 1 to 7, **characterised in that** the curing time of the rubber is at most 30 s.

9. Method according to one of claims 1 to 8, **characterised in that** when it leaves the last roll element the temperature of the thermoplastic elastomer material is no more than 70°C, in particular no more than 50°C, over the melting temperature of the thermoplastic plastic.

10. Method according to one of claims 1 to 9, **characterised in that** the roll system exhibits a total length of 0.8 to 6 m, related to the totality of the roll elements.

11. Method according to one of claims 1 to 10, **characterised in that** the curing of the rubber takes place to such an extent that no more than 10% by weight, in particular no more than 5% by weight, of the rubber is soluble in a rubber solvent.

12. Method according to one of claims 1 to 11, **characterised in that** the melted thermoplastic elastomer material is degassed, in particular in a vacuum.

13. Method according to one of claims 1 to 12, **characterised in that** a planet roll extruder is used as the roll system.

**Revendications**

1. Procédé de fabrication d'une masse élastomère thermoplastique sous forme d'un mélange d'une ou plusieurs matières thermoplastiques et/ou d'un ou plusieurs caoutchoucs réticulés, mélange qui pour sa part est préparé à partir des constituants de mélange suivants, à savoir :

   - une ou plusieurs matières thermoplastiques en une quantité de 10 à 90 % en poids,
   - un ou plusieurs caoutchoucs non-réticulés,
   - un activateur de réticulation,
   - un agent de réticulation, ainsi que
   - éventuellement d'autres additifs,

   par utilisation d'un système de cylindres comprenant un orifice d'alimentation d'une vis transporteuse, qui alimente le premier élément de cylindre, ainsi que d'autres éléments de cylindre comportant des points d'introduction dans la zone de transition des éléments de cylindre, où chaque élément de cylindre comporte un arbre principal et plusieurs arbres périphériques, les constituants du mélange étant en outre introduits dans le système de cylindres par l'orifice d'alimentation et les points d'introduction, **caractérisé par** les étapes suivantes :

   - la ou les matières thermoplastiques et/ou le ou les caoutchoucs non-réticulés sont, en l'absence de l'agent de réticulation, introduits dans le système de cylindres par l'orifice d'alimentation, puis sont fondus et dispersés, et plus précisément avec formation d'un mélange homogène ;
   - le mélange homogène est transporté dans les éléments de cylindre, et plus précisément en même temps que l'introduction d'un agent de réticulation, au niveau d'une zone de transition des éléments de cylindre ;
   - le mélange, pourvu de l'agent de réticulation, est dispersé et homogénéisé, et plus précisément en même temps qu'une vulcanisation, à de grandes vitesses d'allongement de 100 à 1500 s$^{-1}$, avec formation de la masse élastomère thermoplastique ;

   où l'aire laminée par kg de masse élastomère thermoplastique est $\geq$ 75 m$^2$, plus précisément par rapport à la totalité des éléments de cylindre.

2. Procédé de fabrication d'une masse élastomère thermoplastique sous forme d'un mélange d'une ou plusieurs matières thermoplastiques et/ou d'un ou plusieurs caoutchoucs réticulés, mélange qui pour sa part est préparé à partir des constituants de mélange suivants, à savoir :

   - une ou plusieurs matières thermoplastiques en une quantité de 10 à 90 % en poids,
   - un ou plusieurs caoutchoucs non-réticulés,
   - un activateur de réticulation,
   - un agent de réticulation, ainsi que
   - éventuellement d'autres additifs,

   par utilisation d'un système de cylindres comprenant un orifice d'alimentation d'une vis transporteuse, qui alimente le premier élément de cylindre, ainsi que d'autres éléments de cylindre comportant des points d'introduction dans la zone de transition des éléments de cylindre, où chaque élément de cylindre comporte un arbre principal et plusieurs arbres périphériques, les constituants du mélange étant en outre introduits dans le système de cylindres par l'orifice d'alimentation et les points d'introduction, **caractérisé par** les étapes suivantes :

- la ou les matières thermoplastiques et/ou les caoutchoucs réticulés sont, en même temps que l'agent de réticulation, introduits par l'orifice d'alimentation dans le système de cylindres, puis sont fondus et dispersés ;
- le mélange est, en même temps qu'une vulcanisation, dispersé et homogénéisé à de grandes vitesses d'allongement, de 100 à 1500 s$^{-1}$, avec formation de la masse élastomère thermoplastique ;

où l'aire laminée par kg de masse élastomère thermoplastique est $\geq$ 75 m$^2$, plus précisément par rapport à la totalité des éléments de cylindre.

3. Procédé selon la revendication 1, **caractérisé en ce que** l'activateur de réticulation est introduit avant introduction de l'agent de réticulation.

4. Procédé selon l'une des revendications 1 à 3, **caractérisé en ce que** l'aire laminée par kg de masse élastomère thermoplastique est $\geq$ 100 m$^2$, en particulier de 100 à 300 m$^2$.

5. Procédé selon l'une des revendications 1 à 4, **caractérisé en ce que** la répartition des particules de caoutchouc devant être réticulées a lieu pour une valeur de $\eta_{DP}/\eta_{CP} \geq 4$, par des processus de fort écoulement allongeant, par entrée en prise des arbres périphériques dans le fond de vis de l'arbre principal, où $\eta_{DP}$ est la viscosité de la phase dispersée et $\eta_{CP}$ la viscosité de la phase continue.

6. Procédé selon l'une des revendications 1 à 5, **caractérisé en ce que** les vitesses d'allongement sont de 500 à 1500 s$^{-1}$.

7. Procédé selon l'une des revendications 1 à 6, **caractérisé en ce que** le temps de séjour du mélange est $\leq$ 60 s, en particulier de 10 à 30 s, et plus précisément par rapport à l'ensemble des éléments de cylindre.

8. Procédé selon l'une des revendications 1 à 7, **caractérisé en ce que** le temps de réticulation du caoutchouc est $\leq$ 30 s.

9. Procédé selon l'une des revendications 1 à 8, **caractérisé en ce que** la température de la masse élastomère thermoplastique en sortie du dernier élément de cylindre ne dépasse pas de plus de 70°C et notamment de plus de 50°C la température de fusion de la matière thermoplastique.

10. Procédé selon l'une des revendications 1 à 9, **caractérisé en ce que** le système de cylindres a une longueur totale de 0,8 à 6 m, et plus précisément par rapport à la totalité des éléments de cylindre.

11. Procédé selon l'une des revendications 1 à 10, **caractérisé en ce que** la réticulation du caoutchouc s'effectue dans une mesure telle que pas plus de 10 % en poids et notamment pas plus de 5 % en poids du caoutchouc ne soient solubles dans un solvant pour caoutchouc.

12. Procédé selon l'une des revendications 1 à 11, **caractérisé en ce que** la masse élastomère thermoplastique fondue est dégazée, notamment sous vide.

13. Procédé selon l'une des revendications 1 à 12, **caractérisé en ce qu'**on utilise en tant que système de cylindres une extrudeuse à vis planétaires.